# FASCICULE DE BREVET EUROPEEN

(11) **EP 3 488 194 B1**
(45) Date de publication et mention de la délivrance du brevet: **16.03.2022**
(21) Numéro de dépôt: 17745443.6
(22) Date de dépôt: 17.07.2017
(51) Int. Cl.: G01F 11/02, G01F 11/16

(54) **DISPOSITIF POUR DÉPOSER UNE QUANTITÉ PRÉCISE DE PRODUIT**
VORRICHTUNG ZUM AUFBRINGEN EINER GENAUEN MENGE EINES PRODUKTES
DEVICE FOR DEPOSITING A PRECISE QUANTITY OF PRODUCT

(30) Priorité: 22.07.2016 FR 1657038
(43) Date de publication de la demande: 29.05.2019
(73) Titulaire: NBread-Process, 41700 Le Controis en Sologne (FR)
(72) Inventeur: PAURD, Olivier, 41000 Blois (FR)
(74) Mandataire: Plasseraud IP
(86) Numéro de dépôt international: PCT/FR2017/051946
(87) Numéro de publication internationale: WO 2018/015648

(56) Documents cités:
- EP-A1- 1 155 748
- WO-A1-90/08075
- FR-A1- 2 394 468
- GB-A- 2 198 707
- US-A1- 2004 251 279
- US-A1- 2010 072 229

## Description

### DOMAINE ET CONTEXTE DE L'INVENTION

La présente invention concerne les dispositifs de distribution de produit sous forme liquide ou pâteuse ou même effervescente, notamment pour délivrer/déposer une quantité précise de produit dans un moule ou un réceptacle ou sur un support. Ces dispositifs de distribution de produit peuvent être illustrés, par exemple, par le document EP 1 155 748 A1.

La présente invention s'applique en particulier au domaine des produits alimentaires et préparations alimentaires.

On connaît des systèmes qui permettent de déposer des produits alimentaires liquides depuis un réservoir sous pression grâce à l'ouverture pendant une durée prédéterminée d'une valve commandée. Toutefois, il s'avère que la quantité de matière qui passe pendant la durée prédéterminée n'est pas vraiment maîtrisée en volume. De plus, un tel procédé conduit à des éclaboussures, ce d'autant plus que la pression est élevée.

En outre, la durée prédéterminée doit être nécessairement adaptée à la viscosité du produit alimentaire et/ou à la température du produit alimentaire.

On connaît également, par exemple des documents US7621427 ou US2006289082, des dispositifs avec une chambre intermédiaire emplie dans un premier temps par le mouvement d'un piston et vidée dans un second temps par un autre mouvement du piston. Dans ces solutions, il faut prévoir un mouvement translatif du piston ainsi qu'un mouvement rotatif du piston. De plus, le volume mort présent dans la chambre intermédiaire et dans le conduit de sortie est substantiel compte tenu de la forme du piston, ce qui est défavorable à la maîtrise parfaite de la quantité délivrée.

Par conséquent, il subsiste un besoin de proposer une solution pour déposer à basse pression une quantité maîtrisée de produit alimentaire potentiellement hétérogène, en particulier une solution qui convienne quelle que soit la viscosité du produit, et son homogénéité ou inhomogénéité, et ses propriétés potentiellement effervescentes, quelle que soit la granulométrie, potentiellement variable, du produit.

### BREF EXPOSE DE L'INVENTION

À cet effet, il est proposé ici un ensemble de distribution de produit sous forme liquide ou pâteuse ou mousseuse, pour délivrer et déposer une quantité précise de produit sur un support, le dispositif comprenant :
- un cylindre (1), présentant un axe A,
- un piston (2), pouvant être déplacé dans le cylindre par au moins un vérin,
- une voie d'admission de produit,
- une tête d'éjection, qui comprend un clapet déplaçable entre une première position (P1) dite fermée et une deuxième position (P2) dite ouverte, et une buse de sortie, le clapet (3) étant une pièce indépendante et mécaniquement distincte du piston,
- une chambre de préparation (5) agencée dans le cylindre entre le piston et la tête d'éjection,
- au moins un passage de transfert, mettant en relation, sélectivement suivant la position du clapet, la chambre de préparation avec la buse de sortie,
l'ensemble de distribution étant agencé de sorte que lorsque le cylindre se rapproche du support, le contact physique avec le support déplace le clapet de la première position vers la deuxième position et déclenche la délivrance du produit, poussé par le piston, via le passage de transfert, et lorsque le piston arrive en bout de course avant, le piston déplace le clapet de la deuxième position vers la première position et referme ainsi le passage du produit via le passage de transfert, les première et deuxième positions étant stables.

Grâce à ces dispositions, le clapet forme un clapet bistable à 2 positions, ouverte et fermée, le changement d'état étant provoqué par une action purement mécanique c'est-à-dire le contact sur le support pour l'ouverture et l'arrivée en bout de course du piston pour la fermeture.

De plus, avantageusement, la chambre de préparation définit précisément un volume à délivrer ; le passage de transfert représente un volume très petit ; par conséquent lorsque le piston avance au maximum, le volume mort de produit dans le passage de transfert est d'une part petit et d'autre part constant cycle après cycle.

Dans divers modes de réalisation de l'invention, on peut éventuellement avoir recours en outre à l'une et/ou à l'autre des dispositions suivantes :
Selon un cas particulier intéressant, le produit mis en oeuvre dans l'ensemble de distribution est un produit alimentaire. Le système présenté, ainsi que le procédé correspondant, s'avèrent former une solution particulièrement intéressante pour déposer de façon récurrente sur une chaîne de fabrication une quantité maîtrisée de produit alimentaire, par exemple en préalable à un passage dans un four de cuisson.

Selon une solution particulière, le produit peut être admis dans la chambre de préparation, via une vanne commandée agencée sur la voie d'admission, depuis un réservoir pressurisé; moyennant quoi le remplissage de la chambre de préparation peut être très rapide voire extrêmement rapide, ce qui permet d'avoir le temps de cycle principalement mobilisé par la dépose à basse pression et très peu par le remplissage pour la dépose suivante.

Selon une solution particulière, le produit peut être admis dans la chambre de préparation depuis un réservoir en utilisant la gravité ; dans cette configuration, le système mis en oeuvre est particulièrement simple, avec un stockage en trémie de la réserve de produit;

Selon une solution particulière, le piston peut comprendre un canal axial (20) d'admission pour admettre le produit. Dans une solution préférée, le canal axial d'admission comprend un alésage central et au moins un prolongement en biais, et de préférence trois prolongements en biais répartis autour de l'axe. Moyennant quoi, le cylindre est particulièrement simple à fabriquer, et grâce aux prolongements en biais qui débouchent à distance de l'axe, la forme du piston est idéale pour repousser le clapet dans la partie axiale centrale.

Selon une solution alternative, il est prévu que la voie d'admission puisse être radiale, via un orifice agencé dans le cylindre au voisinage de la tête d'éjection, (plus précisément au voisinage de la surface délimitant la chambre de préparation) ; dans cette version, le piston est plus simple à fabriquer, et on peut disposer un seul vérin de manoeuvre coaxialement au piston en arrière de ce dernier.

Selon une réalisation, le clapet peut comprendre un corps cylindrique, une tige arrière cylindrique de section plus faible que la section du corps cylindrique, et une tige avant, cylindrique ou non, et de section plus faible que la section du corps cylindrique. Le rapport des sections permet d'obtenir l'effet bistable, c'est-à-dire que la section de la tige arrière étant petite, la pression exercée par le piston, lorsqu'il se rapproche, reste modérée et en deçà de la somme de la pression exercée en aval et du frottement des joints toriques. De plus, la finesse de la tige avant permet d'avoir une ouverture de buse de sortie suffisamment large autour de cette tige.

Selon une réalisation, il est prévu au moins un joint torique autour de la tige arrière et au moins un joint torique autour du corps cylindrique. Ces joints permettent d'éviter une fuite depuis la chambre de préparation (5) en direction de la chambre de dégagement (94) et aussi d'éviter une remontée de produit depuis la buse de sortie vers la chambre de dégagement ; par ailleurs, la présence de ces joints toriques est bénéfique pour garantir la stabilité des deux positions extrêmes du clapet, à savoir la position ouverte et la position fermée, grâce aux frottements que les joints toriques opposent à leur déplacement.

Selon une réalisation, le piston est monté sur un bâti avec le (ou les) vérin(s), et c'est la chemise et la tête d'injection qui se déplacent par rapport au piston et au bâti. Dans ces conditions, il suffit de piloter la position du cylindre, alors que le piston associé avec le vérin de manoeuvre restent stationnaires ; cela s'avère être une configuration très simple et peu coûteuse.

Selon une réalisation, il est prévu des colonnes de guidage, et un flasque solidaire du cylindre, flasque sur lequel sont montées les colonnes de guidage. Dans ces conditions, le vérin ou les vérins de manoeuvre peuvent être de type relativement simple sans fonction de guidage. Alternativement, on peut prévoir que les tiges des vérins fournissent la fonction de guidage comme les colonnes.

Selon une réalisation, les colonnes de guidage et les tiges de piston 73,74, au nombre de 4 ou plus, sont répartis sur une zone annulaire du flasque. On propose ainsi un ensemble compact et très bien équilibré.

Selon une réalisation, le système comprend un dispositif d'ajustement du volume dispensé, le dispositif d'ajustement permettant de régler l'écartement maximum entre le piston et la chemise, à savoir le volume admis dans la chambre de préparation. Moyennant quoi, il est très facile de reconfigurer l'ensemble de distribution pour changer de campagne de fabrication.

Selon une réalisation, le système comprend avantageusement une chambre de dégagement, configurée pour recevoir le corps cylindrique du clapet lorsqu'il remonte vers la position ouverte P2, et un passage de mise à l'air libre de cette chambre de dégagement. Grâce à quoi, le déplacement du clapet n'est pas du tout gêné par l'espace creux qu'il délimite à l'intérieur de la tête éjection et par l'air qui le remplit cycliquement.

Selon une réalisation, le passage de transfert peut comprendre un alésage d'axe parallèle à l'axe A du cylindre est un perçage oblique ('en biais'). Moyennant quoi, on peut obtenir par usinage classique un ou plusieurs passages de transfert dans une zone annulaire de la tête d'éjection, en zone extérieure du clapet. Avantageusement, on peut prévoir deux ou trois passages de transfert répartis régulièrement autour de l'axe A. on obtient une section de passage suffisante pour l'écoulement du produit sans effet de goulot d'étranglement.

Selon une réalisation, le support est formé par un ou plusieurs réceptacle(s) ou moule(s).

Selon une réalisation, le support peut être animé d'un mouvement relatif par rapport au cylindre pendant la délivrance du produit.

### EXPOSE DES FIGURES

D'autres aspects, buts et avantages de l'invention apparaîtront à la lecture de la description suivante de plusieurs de ses modes de réalisation, donnés à titre d'exemples non limitatifs. L'invention sera également mieux comprise en regard des dessins joints sur lesquels :
- la figure 1 est une vue schématique en coupe d'un système/ensemble de distribution selon un premier mode de réalisation de l'invention, dans une configuration après admission de produit et juste avant délivrance;
- la figure 2 est une vue analogue à la figure 1, dans une configuration juste après l'ouverture du clapet provoqué par le contact avec le support ;
- la figure 3 est une vue analogue à la figure 1, dans une configuration en cours de délivrance du produit, la chambre de préparation se vidant sous l'effet de la descente du piston ;
- la figure 4 est une vue analogue à la figure 1, dans une configuration où le piston arrivé en bout de course pousse le clapet qui repasse en position fermée prêt pour un nouveau chargement;
- la figure 5 est une vue détaillée de l'extrémité avant du piston en coupe et en perspective ;
- la figure 6 est une vue détaillée, en coupe et en perspective, de la tête d'éjection incluant le clapet ;
- la figure 7 montre un chronogramme illustrant la séquence des opérations mises en oeuvre par le système de distribution
- la figure 8 montre en détail la partie avant du piston ;
- la figure 9 est une vue analogue à la figure 1 selon un second mode de réalisation, avec une admission radiale au lieu de axiale;
- la figure 10 est un graphique analogue à celui de la figure 7, selon une variante de réalisation.

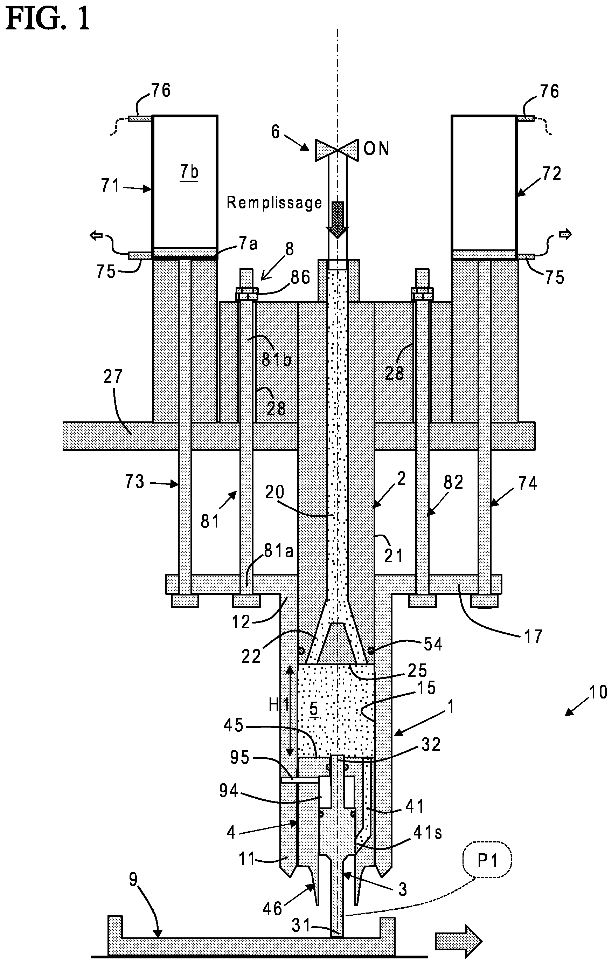

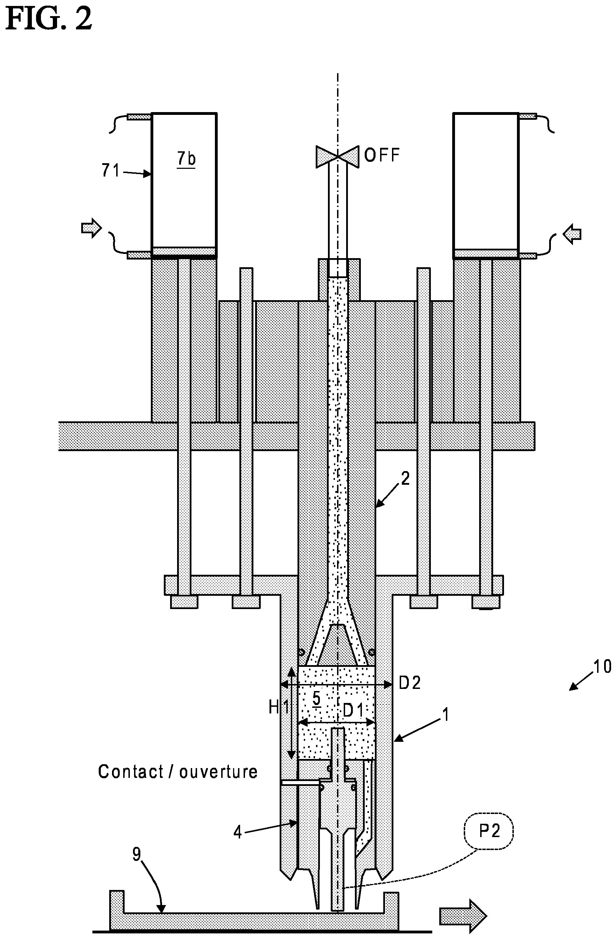

Il faut noter que pour améliorer la lisibilité et la clarté de l'exposé, toutes les références numériques ne sont pas présentes sur les figures 2 à 4, mais il faut comprendre que les références numériques portées sur la figure 1 peuvent être reportées sur les figures 2 à 4.

### DESCRIPTION DETAILLEE

Sur les différentes figures, les mêmes références désignent des éléments identiques ou similaires.

Dans un exemple de réalisation de la présente invention, on veut déposer une quantité précise et maîtrisée d'un produit alimentaire.

Toutefois, la configuration du système présenté ci-dessous peut aussi convenir pour délivrer une quantité maîtrisée d'un produit quelconque, que cela soit un produit chimique, une colle, un additif, un catalyseur, et plus généralement tout produit non alimentaire.

Le produit à dispenser peut se présenter sous une forme pâteuse, une forme liquide, une forme pulvérulente, une forme mousseuse. De plus, le produit n'est pas forcément homogène, il peut inclure des granulés, des éclats, plus généralement des inserts de taille supérieure à la granulométrie générale du produit. Le produit peut être mousseux et/ou effervescent.

Selon une solution avantageuse pour la fabrication en série, on veut répéter sans délai une opération de chargement d'une quantité maîtrisée de produit et de délivrance sur un support de cette quantité de produit. Généralement, le support peut être fixe ou mobile par rapport au système de distribution qui va être décrit maintenant.

Le système de distribution peut se trouver sur un bâti fixe, ou sur un portique à un ou plusieurs degrés de liberté, ou encore à l'extrémité de bras du robot.

Selon l'exemple illustré aux figures 1 à 8, le produit est déposé par un ensemble de distribution 10 (également appelé indifféremment système de distribution 10) qui va être détaillé plus loin. Le produit est déposé sur un support 9 qui se déplace, de préférence horizontalement, vis-à-vis du dispositif de distribution. Le support en question peut être de type convoyeur ou tapis roulant. Le produit est déposé soit directement sur le convoyeur, soit sur des petits conteneurs ou moules posés sur le convoyeur et se déplaçant avec le conteneur. Bien entendu, le support 9 peut être aussi stationnaire.

On peut aussi prévoir un déplacement de l'ensemble de distribution notamment dans le cas où il est embarqué à l'extrémité d'un bras de robot.

L'ensemble de distribution 10 comprend un **cylindre 1,** et un **piston 2** pouvant être déplacé par rapport au cylindre au moyen d'au moins un vérin.

Le cylindre **1** présente une partie principale tubulaire symétrique de révolution autour d'un axe **A** (on peut aussi l'appeler « chemise »). Le cylindre est prolongé par un **flasque 17** se présentant comme un disque plat d'axe **A** s'étendant radialement vers l'extérieur à partir de l'extrémité arrière **12** du cylindre.

Dans la présente description, le terme « *avant* » désigne un élément situé en direction de la sortie de produit à délivrer, donc ici vers le bas, le terme « *arrière* » désigne un élément situé du côté opposé à la sortie de produit à délivrer, donc ici vers le haut.

Dans le premier mode de réalisation, le piston **2** est fixé solidairement à un **bâti 27**, sur lequel sont également fixés les corps de deux vérins de manœuvre **71,72**. Comme connu en soi, chacun des vérins comprend un espace pneumatique interne partitionné en deux chambres **7a,7b** par un piston lié à une tige de manœuvre.

Chacun des vérins comprend une tige **73,74** dont l'extrémité opposée à la chambre cylindrique est fixée au flasque **17** susmentionné.

En outre, dans l'exemple illustré, il est prévu des colonnes de guidage repérées **81 82** avec une première 81a de leur extrémité fixée au flasque **17** susmentionné, et une portion **81b** située vers la seconde extrémité, qui coulisse dans un palier cylindrique **28** du bâti.

Par ailleurs, l'ensemble de distribution comprend une **tête d'éjection 4**, qui se présente comme une douille reçue à l'intérieur du cylindre dans sa partie avant **11** c'est-à-dire au voisinage de la sortie. De plus l'ensemble de distribution comprend un **clapet 3** essentiel au bon fonctionnement et qui sera détaillé par la suite, et une **buse** de sortie **46**, par laquelle le produit se déverse sur le support **9**.

Il faut remarquer que le clapet **3** est une pièce indépendante et mécaniquement distincte du piston **2**.

Le clapet **3** est déplaçable entre une première position **P1** dite fermée et une deuxième position **P2** dite ouverte. Nous verrons plus bas que le fonctionnement confère une caractéristique bistable à ces deux positions extrêmes, c'est-à-dire chacune d'elles n'est quittée que par une action spécifique. On peut même qualifier parler *de bi-stabilité mécanique,* car en effet c'est seulement une action mécanique spécifique qui fait passer le clapet d'une position à l'autre et vice versa.

On note que le terme clapet « *clapet* » est équivalent ici à d'autres termes comme *« valve* » ou « *soupape* »*.*

Dans l'exemple illustré ici, le **clapet 3** comprend un **corps cylindrique 30**, une **tige arrière 32** cylindrique de section plus faible que la section du corps cylindrique, et une **tige avant 31**, cylindrique ou non, et de section plus faible que la section du corps cylindrique. On remarque que le clapet peut être obtenu simplement par tournage. De préférence on choisira comme matière l'acier inoxydable ou bien un plastique haute performance biocompatible.

À l'intérieur du cylindre **1**, entre le piston et la tête d'éjection, on définit une **chambre de préparation 5** délimitée en pratique par la paroi interne **15** du cylindre 1, par la face avant **25** du piston 2, et par la face arrière **45** de la tête d'éjection 4.

Lorsque le clapet 3 est dans la première position **P1** à savoir fermé (et le piston en retrait maximum), la chambre de préparation représente un volume purement cylindrique d'axe A, de diamètre **D1** correspondant au diamètre intérieur du cylindre, et dont la hauteur **H1** correspond à la course maximum de recul du piston.

Lorsque le clapet **3** est dans la première position **P1,** la tige arrière **32** fait saillie dans la chambre de préparation, mais la réduction de volume de la chambre de préparation 5 reste limitée, inférieure à 5 % et de préférence inférieure à 3 %.

Dans la tête d'éjection, il est prévu un **passage de transfert 41**, mettant en relation, sélectivement suivant la position du clapet, la chambre de préparation avec la buse de sortie **46**.

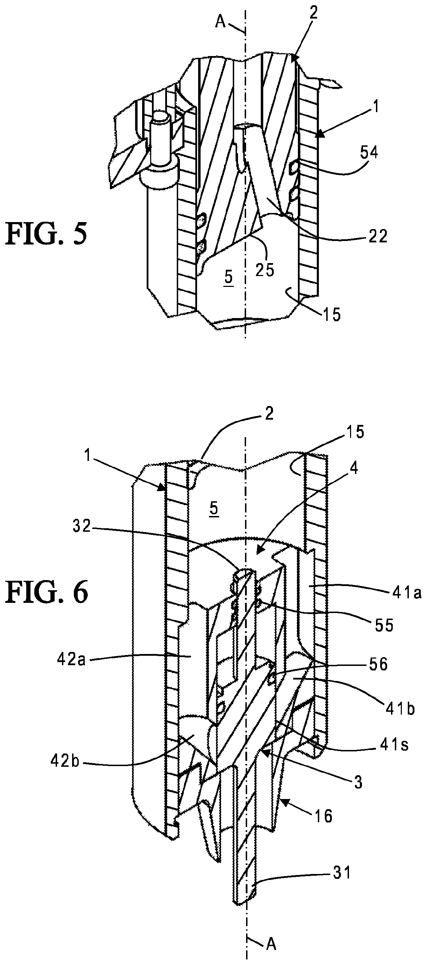

Dans la configuration représentée à la figure 1, la chambre de préparation 5 est remplie de produit prêt à être délivré, le clapet **3** est en position fermée, c'est-à-dire vers le bas, et la sortie **41s** du passage de transfert **41** est fermée par le corps cylindrique du clapet. Chaque passage de transfert est formé dans l'exemple illustré (cf FIG 6) par un perçage **41a,42a** d'axe parallèle à l'axe principal A et un perçage oblique **41b,42b** situés respectivement dans le prolongement des perçage **41a,42a**.

Pour déclencher le processus de dépose du produit, le cylindre est descendu vers le bas jusqu'à ce que la tige avant **31** du clapet rencontre le support **9**. Alors, le clapet est repoussé vers le haut et se déplace, du fait de la descente du cylindre **1**, jusqu'à la position représenté à la figure 2 ; en même temps, la sortie **41s** du passage de transfert est libérée et le produit se déverse par la buse de sortie **46** sur le support **9**.

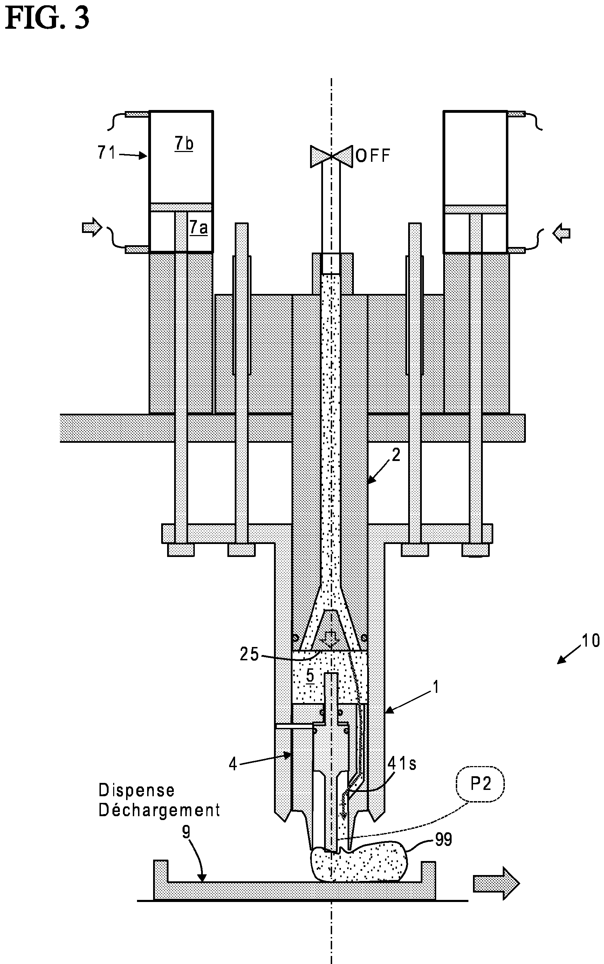

En suivant, les vérins pneumatiques sont commandés pour faire avancer le piston dans le cylindre (voir selon le point de vue faire reculer le cylindre par rapport au piston stationnaire). On envoie de l'air comprimé dans le conduit d'entrée **75** du vérin pneumatique **71,72**. La figure 3 illustre une position intermédiaire, la dépose du produit étant en cours de réalisation, un boudin de produit **99** est ainsi formé sur le support ; la pression d'air est appliquée sur les chambres basses **7a** des vérins pneumatiques.

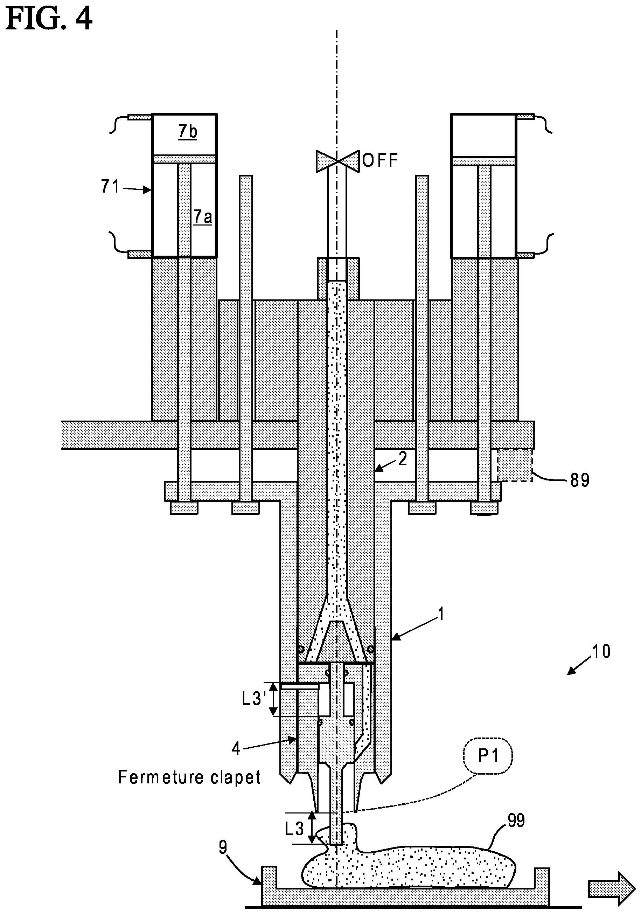

Ce mouvement se poursuit jusqu'à ce que le piston **2** arrive en butée c'est-à-dire contre la face supérieure **45** de la tête d'éjection ; mais au passage le piston repousse le clapet **3** vers le bas, ce qui le fait passer de la position ouverte **P2** à la position fermée **P1** ; ceci est illustré à la figure 4.

Autour du piston, il est prévu un joint torique **54** pour assurer l'étanchéité à l'interface entre le piston 2 et le cylindre 1.

On remarque que l'admission du produit peut provenir par gravité d'une trémie de réserve située au-dessus de l'ensemble de distribution. Selon une autre configuration, l'admission du produit provient d'un réservoir pressurisé.

Dans les deux cas, il est prévu une vanne commandée **6** de type électrovanne, de préférence tout ou rien, pour autoriser le passage du produit depuis le réservoir vers la chambre de préparation **5**. On note que la vanne commandée **6** peut être optionelle si on utilise des vérins double effet.

On remarque que, lorsque le réservoir de produits est pressurisé, la pression du réservoir permet le remplissage sans commande active sur les vérins pneumatiques, il suffit de commander à l'échappement libre les connexions fluidiques basses **75**.

À l'inverse, lorsque l'on utilise la gravité, il est alors utile d'utiliser les vérins pneumatiques en mode double effet c'est-à-dire pouvoir gonfler chacune des chambres de part et d'autre du piston, soit un chargement de produit en mode « aspiration » active.

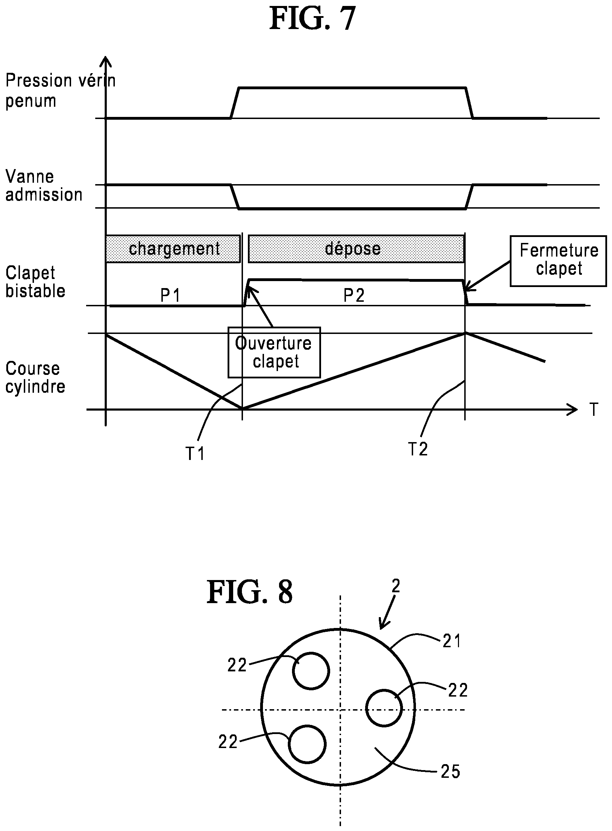

Dans l'exemple illustré, le remplissage de la chambre de préparation 5, autrement dit l'opération de « chargement » se produit au travers du corps du piston 2. Plus précisément, le piston comprend un canal axial **20** réalisé sous la forme d'un alésage central **20a** qui ne débouche pas directement du côté de l'extrémité avant du piston, cet alésage central étant prolongé par des canaux auxiliaires aussi appelés prolongements en biais (ou 'obliques') repérés **22**. Dans l'exemple illustré aux figures 1 à 4, il peut y avoir deux prolongements en biais, mais selon un autre exemple illustré aux figures 5 et 8, il peut y avoir avantageusement trois prolongements en biais répartis à 120° autour de l'axe, voire quatre prolongements en biais. Ces prolongements en biais **22** débouchent sur l'extrémité avant **25** du piston dans une zone intermédiaire à distance de l'axe et de la bordure externe du piston.

Comme illustré à la figure 7, qui représente la configuration où le piston est stationnaire avec le bâti, c'est la chemise dont la position le long de l'axe va être commandé par les moyens pneumatiques et/ou par la pression venant du réservoir.

Dans la première phase représentée, c'est-à-dire le chargement, le cylindre descend et la chambre de préparation se remplit de produit ; à l'instant **T1**, qui correspond peu ou prou au début du contact de la tige avant du clapet avec le support, on commande la fermeture de la vanne d'admission **6**. La descente se termine par le recul du clapet **3** qui provoque la libération de la sortie **41s** et le début de la dépose au travers du passage de transfert **41**. Dans le même temps à l'instant **T1**, on commande la chambre basse des vérins pneumatiques de manière à commencer le mouvement de remontée du cylindre.

Ici il faut remarquer que la pression régnant à l'intérieur de la chambre de préparation est légèrement supérieure à la pression atmosphérique, mais pas plus ; cela ne suffit pas à repousser le clapet vers l'avant, car la section de la tige arrière est petite, et on bénéficie de l'effort de frottement des joints toriques **55,56**.

Ainsi depuis l'instant **T1**, le cylindre remonte mais le clapet **3** reste ouvert ce qui provoque la dépose continue de produit sur le support, ce qui se poursuit jusqu'à l'instant **T2**.

À l'instant **T2**, le cylindre approche le recul maximum et par conséquent l'extrémité avant du piston vient contacter la tige arrière du clapet et le repousse jusqu'à ce que le piston arrive en butée contre la surface arrière **45** de la tête d'éjection **4** et simultanément cela provoque le déplacement du clapet vers sa position fermée **P1.** Alors la commande pneumatique sur le vérin est stoppée et la chambre basse passe à l'échappement libre, quasiment au même moment, on ouvre à nouveau la vanne commande d'admission 6 ce qui repousse le cylindre vers le bas.

Et ainsi de suite jusqu'à ce que la butée d'écartement maximum du piston soit atteinte et le remplissage terminé.

Le réglage du recul maximum, i.e. l'ajustement du volume de chargement, est fait grâce à une **butée réglable 8**, appelé généralement «dispositif d'ajustement du volume 8 ». Dans la réalisation illustrée, il s'agit d'une cale **86** à écrou et contre-écrou sur les colonnes de guidage (cf Fig 1).

Lorsque le clapet de déplace, le corps cylindrique **30** parcourt un espace appelé chambre de dégagement **94**. La chambre de dégagement **94** est configurée pour recevoir le corps cylindrique **30** du clapet lorsqu'il remonte vers sa position ouverte **P2**, et il est prévu un passage **95** de mise à l'air libre de cette chambre de dégagement. Grâce à quoi, le déplacement du clapet n'est pas du tout gêné par l'espace creux qu'il délimite à l'intérieur de la tête éjection et par l'air qui le remplit cycliquement, aucune contre pression ne s'exerce sur le corps cylindrique 30, hormis la pression atmosphérique des deux côtés, haut et bas.

### Second mode de réalisation

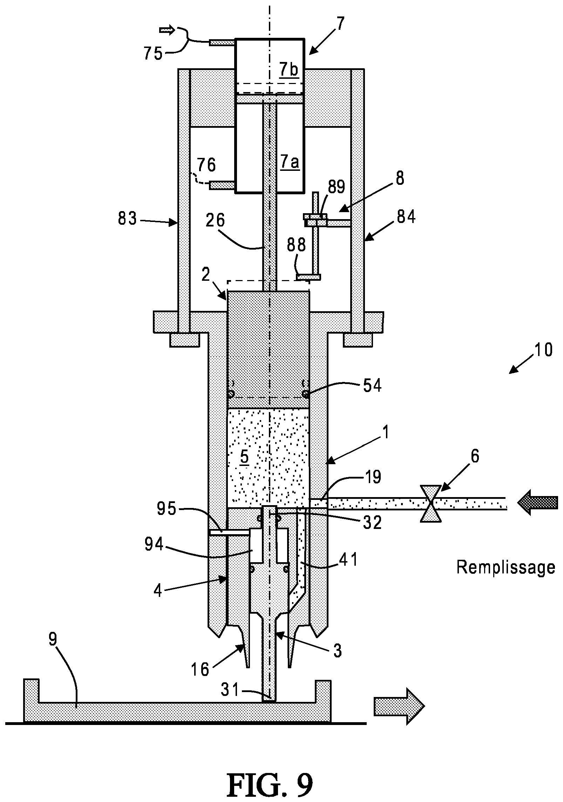

Comme illustré à la figure 9, l'admission de produit à partir du réservoir se fait dans une position radiale dans le cylindre et non plus au travers du piston. Les éléments concernant la tête d'éjection, le clapet le passage de transfert et le principe de fonctionnement du clapet ne sont pas répétés ici car ils sont considérés identiques ou similaires à ce qui a été décrit précédemment.

On remarque que le piston peut être tout à fait basique c'est-à-dire un piston cylindrique sans perçage ; par conséquent pour la commande de déplacement du piston à l'intérieur du cylindre, on peut utiliser un vérin pneumatique **7** unique en position axiale.

Dans cette configuration, le corps du vérin **7** est relié au cylindre (et non au piston) et par conséquent l'entrée à commander **75** (pour commander la dépose du produit) se trouve en haut (configuration inverse par rapport au premier exemple). Le corps du piston pneumatique est relié au flasque du cylindre par les colonnes repérées **83,84**.

La position de l'orifice de remplissage **19** se trouve dans la paroi du cylindre en position juste adjacente à la face arrière **45** de la tête d'éjection. On remarque qu'il peut y avoir plusieurs petits orifices de remplissage sur le pourtour du cylindre alimenté par un collecteur non représenté.

Pour le réglage de la course maximale d'écartement du piston, il est prévu comme dans le premier mode un dispositif d'ajustement du volume, repéré **8**, ici sous la forme d'une cale **88** réglable en hauteur, par exemple via un écrou 89 à serrer ou un mécanisme de vis-écrou. La cale 88 forme une butée pour la remontée maximale du piston dans le cylindre ce qui définit par le fait un volume maximum d'admission pour la chambre de préparation 5.

On remarque que dans la première position, la tige avant **31** du clapet dépasse d'une certaine longueur **L3** ; en pratique cette longueur correspond aussi à la longueur axiale **L3'** de la chambre de dégagement. Toutefois on note que **L3'** pourrait être légèrement supérieure à **L3**.

Il faut remarquer que le clapet **3** selon la présente invention est déplacé par des moyens mécaniques directs, et non pas par un simple différentiel de pression. Par conséquent, quel que soit la consistance du produit cela fonctionne correctement alors que, le bon fonctionnement d'un clapet à dépression serait altéré par un liquide très visqueux ou en cas de petits grumeaux.

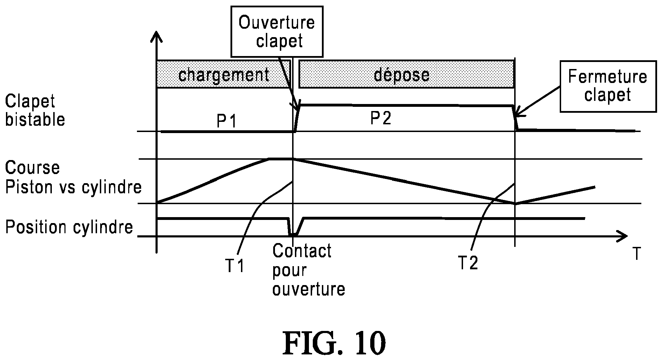

Sur la Figure 10, on a représenté une séquence chronologique, dans une configuration où le cylindre est piloté en position (par exemple sur un bras de portique ou un bras de robot), et les mouvements du piston étant pilotés par le vérin pneumatique 7.

Dans la première phase représentée, c'est-à-dire le chargement, le piston remonte et la chambre de préparation **5** se remplit de produit ; autour de l'instant **T1**, on commande la descente de l'ensemble [cylindre + piston] jusqu'à ce que la tige avant 31 du clapet contacte le support **9** et que le clapet **3** recule ce qui provoque son passage de la position fermée **P1** vers la position ouverte **P2** et le flux du produit au travers du passage de transfert **41**. Simultanément ou juste après, la séquence de dépose commence, sous l'effet du remplissage pneumatique de la chambre supérieure **7b** du piston pneumatique 7. La séquence de dépose se poursuit jusqu'à l'instant **T2** où le piston fini sa descente et arrive en butée en repoussant simultanément le clapet 3 depuis sa position ouverte **P2** vers sa position fermée **P1.**

De même que précédemment, la pression régnant à l'intérieur de la chambre de préparation pendant la phase de dépose est légèrement supérieure à la pression atmosphérique, mais pas plus ; cela ne suffit pas à repousser le clapet vers l'avant, car la section de la tige arrière est petite, et on bénéficie de l'effort de frottement des joints toriques **55,56.** Ainsi depuis l'instant **T1**, le cylindre remonte mais le clapet **3** reste ouvert ce qui provoque la dépose continue de produit sur le support, ce qui se poursuit jusqu'à l'instant **T2**.

Sur les figures 7 et 10, on a représenté une durée de phase de chargement légèrement inférieure à la durée de la phase de dépose. Toutefois, selon une variante avantageuse, le changement peut être beaucoup plus rapide que la phase de dépose si le réservoir est pressurisé. Ainsi on pourra obtenir une phase de chargement de l'ordre de 0,1 seconde pour une durée de phase de dépose comprise entre 0,4 seconde et 1 seconde.

D'une manière générale, on privilégiera un ratio entre la durée de chargement et la durée de dépose compris entre 1/2 et 1/8. Typiquement la durée de cycle complet (chargement + dépose) pourra être comprise entre 0,4 seconde et 2 secondes.

S'agissant du volume admis dans la chambre de préparation, il n'y a pas vraiment de limites, on note que les applications typiques pourront traiter un volume cible compris entre 1 cm³ et 100 cm³.

Le cylindre **1** peut être réalisé en acier inoxydable, ou en matière synthétique ou plastique haute performance compatible des matières alimentaires. Il en est de même pour la tête d'éjection 4 qui peut être réalisée dans les mêmes matières.

S'agissant du piston **2**, il peut aussi être fabriqué en acier inoxydable ; le téflon ou une matière synthétique haute performance peut aussi convenir.

S'agissant des dimensions typiques, on pourra choisir pour **D1** une dimension comprise entre 25 et 40mm, avec **D2** typiquement égale à D1 + 3 à 6 mm suivant les épaisseurs de paroi du cylindre.

## Revendications

1. Ensemble de distribution (10) de produit sous forme liquide ou pâteuse ou mousseuse, pour délivrer et déposer une quantité précise de produit sur un support (9), l'ensemble de distribution comprenant :
- un cylindre (1), présentant un axe A,
- un piston (2), pouvant être déplacé dans le cylindre par au moins un vérin (7;71,72),
- une voie d'admission de produit,
- une tête d'éjection (4), qui comprend un clapet (3) déplaçable entre une première position (P1) dite fermée et une deuxième position (P2) dite ouverte, et une buse de sortie (46), le clapet (3) étant une pièce indépendante et mécaniquement distincte du piston (2),
- une chambre de préparation (5) agencée dans le cylindre entre le piston et la tête d'éjection,
- au moins un passage de transfert (41), mettant en relation, sélectivement suivant la position du clapet, la chambre de préparation avec la buse de sortie,
l'ensemble de distribution étant agencé de sorte que lorsque le cylindre se rapproche du support, le contact physique avec le support déplace le clapet de la première position vers la deuxième position et déclenche la délivrance du produit, poussé par le piston, via le passage de transfert, et lorsque le piston arrive en bout de course avant, le piston déplace le clapet de la deuxième position vers première la position et referme ainsi le passage du produit via le passage de transfert.

2. Ensemble de distribution selon la revendication 1, dans lequel le produit est admis dans la chambre de préparation depuis un réservoir via une vanne commandée (6),
agencée sur la voie d'admission, soit en utilisant la gravité, soit au moyen d'une pressurisation du réservoir.

3. Ensemble de distribution selon l'une des revendications 1 à 2, dans lequel le piston (2) comprend un canal axial (20) d'admission pour admettre le produit.

4. Ensemble de distribution selon la revendication 3, dans lequel le canal axial (20) d'admission comprend un alésage central (20a) et au moins un prolongement en biais (22).

5. Ensemble de distribution selon l'une des revendications 1 à 2, dans lequel la voie d'admission est radiale, via un orifice (19) agencé dans le cylindre au voisinage de la tête d'éjection.

6. Ensemble de distribution selon l'une des revendications 1 à 5, dans lequel le clapet comprend un corps cylindrique (30), une tige arrière (32) cylindrique de section plus faible que la section du corps cylindrique, et une tige avant (31), cylindrique ou non, et de section plus faible que la section du corps cylindrique.

7. Ensemble de distribution selon l'une des revendications 1 à 6, dans lequel le piston est monté sur un bâti avec le vérin, c'est la chemise et la tête d'injection qui se déplacent par rapport au piston et au bâti.

8. Ensemble de distribution selon l'une des revendications 1 à 7, qui comprend un dispositif d'ajustement du volume (8), le dispositif d'ajustement permettant de régler l'écartement maximum entre le piston et la chemise, à savoir le volume admis dans la chambre de préparation.

9. Ensemble de distribution selon l'une des revendications 1 à 8, dans lequel il est prévu une chambre de dégagement (94), configurée pour recevoir le corps cylindrique (30) du clapet lorsqu'il remonte vers sa position ouverte P2, et un passage de mise à l'air libre (95) de cette chambre de dégagement.

10. Ensemble de distribution selon l'une des revendications 1 à 9, dans lequel le produit mis en œuvre est un produit alimentaire.

## Patentansprüche

1. Verteilungsanordnung (10) für ein Produkt in flüssiger oder pastöser oder schaumartiger Form, um eine genaue Produktmenge auf einen Träger (9) zu liefern und abzulegen, wobei die Verteilungsanordnung Folgendes umfasst:
- einen Zylinder (1) mit einer Achse A,
- einen Kolben (2), der von mindestens einem Aktuator (7;71,72) im Zylinder verschoben werden kann,
- eine Produkteinlassbahn,
- einen Ausstoßkopf (4), der eine Klappe (3), die zwischen einer ersten Position (P1), die als geschlossen bezeichnet wird, und einer zweiten Position (P2), die als offen bezeichnet wird, verschoben werden kann, und eine Auslassdüse (46) umfasst, wobei die Klappe (3) ein unabhängiges Teil und von dem Kolben (2) mechanisch getrennt ist,
- eine Vorbereitungskammer (5), die im Zylinder zwischen dem Kolben und dem Ausstoßkopf angeordnet ist,
- mindestens einen Übertragungsdurchgang (41), der wahlweise je nach Position der Klappe die Vorbereitungskammer mit der Austrittsdüse in Verbindung bringt, wobei die Verteilungsanordnung derart angeordnet ist, dass, wenn sich der Zylinder dem Träger nähert, der physische Kontakt mit dem Träger die Klappe von der ersten Position in die zweite Position verschiebt und die Abgabe des durch den Kolben gedrückten Produkts über den Übertragungsdurchgang auslöst, und wenn der Kolben das Ende seines Vorwärtshubs erreicht, verschiebt der Kolben die Klappe von der zweiten Position in die erste Position und schließt somit den Durchgang des Produkts über den Übertragungsdurchgang.

2. Verteilungsanordnung nach Anspruch 1, wobei das Produkt aus einem Vorratsbehälter über ein gesteuertes Ventil (6), das auf der Einlassbahn angeordnet ist, in die Vorbereitungskammer entweder durch Verwendung der Schwerkraft oder durch Druckbeaufschlagung des Vorratsbehälters eingelassen wird.

3. Verteilungsanordnung nach einem der Ansprüche 1 bis 2, wobei der Kolben (2) einen axialen Einlasskanal (20) aufweist, um das Produkt einzulassen.

4. Verteilungsanordnung nach Anspruch 3, wobei der axiale Einlasskanal (20) eine zentrale Bohrung (20a) und mindestens eine angewinkelte Verlängerung (22) umfasst.

5. Verteilungsanordnung nach einem der Ansprüche 1 bis 2, wobei die Einlassbahn über eine Öffnung (19), die in dem Zylinder in der Nähe des Ausstoßkopfes angeordnet ist, radial ist.

6. Verteilungsanordnung nach einem der Ansprüche 1 bis 5, wobei die Klappe einen zylindrischen Körper (30), eine hintere zylindrische Stange (32) mit kleinerem Querschnitt als der Querschnitt des zylindrischen Körpers und eine vordere zylindrische oder nicht zylindrische Stange (31) mit größerem Querschnitt als der Querschnitt des zylindrischen Körpers umfasst.

7. Verteilungsanordnung nach einem der Ansprüche 1 bis 6, wobei der Kolben auf einem Rahmen mit dem Aktuator montiert ist, wobei der Mantel und der Ausstoßkopf sich relativ zu dem Kolben und dem Rahmen bewegen.

8. Verteilungsanordnung nach einem der Ansprüche 1 bis 7, die eine Volumeneinstellvorrichtung (8) umfasst, wobei die Einstellvorrichtung es ermöglicht, den maximalen Abstand zwischen dem Kolben und dem Mantel einzustellen, das heißt das in die Vorbereitungskammer eingelassene Volumen.

9. Verteilungsanordnung nach einem der Ansprüche 1 bis 8, wobei eine Freiraumkammer (94), die konfiguriert ist, um den zylindrischen Körper (30) der Klappe aufzunehmen, wenn sie sich in Richtung ihrer offenen Position P2 erhebt, und ein Entlüftungsdurchgang (95) der Freiraumkammer vorgesehen sind.

10. Verteilungsanordnung nach einem der Ansprüche 1 bis 9, wobei das verwendete Produkt ein Lebensmittelprodukt ist.

## Claims

1. Distribution assembly (10) for product in liquid or dough or foam form, for delivering and depositing a precise quantity of product on a support (9), where the distribution assembly comprises:
- a cylinder (1), having an axis A,
- a piston (2), which can be displaced in the cylinder by at least one actuator (7; 71, 72),
- a path for taking in the product,
- an ejection head (4), which comprises a slide valve (3) movable between a first position (P1) called closed and a second position (P2) called open, and an outlet nozzle (46), the slide valve (3) being a mechanically distinct and an independent part from the piston (2),
- a preparation chamber (5) arranged in the cylinder between the piston and the ejection head, and
- at least one transfer passage (41), connecting, selectively according to the position of the slide valve, the preparation chamber with the outlet nozzle,
where the distribution assembly is arranged such that when the cylinder comes towards the support, the physical contact with the support moves the slide valve from the first position to the second position and triggers delivery of the product, pushed by the piston, via the transfer passage, and when the piston arrives at the forward end of range, the piston moves the slide valve from the second position to the first position and thus closes the passage for the product via the transfer passage, and where the first and second positions are stable.

2. Distribution assembly according to claim 1, wherein the product enters the preparation chamber from a reservoir via a controlled inlet valve (6), disposed on the admission path, either by using gravity, or by means of pressurization of the reservoir.

3. Distribution assembly according to one of claims 1 to 2, wherein the piston (2) comprises an axial intake channel (20) for taking in the product.

4. Distribution assembly according to claim 3, wherein the axial intake channel (20) comprises a central bore (20a) and at least one extension on a bias (22).

5. Distribution assembly according to one of claims 1 to 2, wherein the intake channel is radial, through an orifice (19) laid out in the cylinder in the neighborhood of the ejection head.

6. Distribution assembly according to one of claims 1 to 5, wherein the slide valve comprises a cylindrical body (30), a cylindrical rear rod (32) of smaller section than the section of this cylindrical body, and a front rod (31), cylindrical or not, and of smaller section than the section of the cylindrical body.

7. Distribution assembly according to one of claims 1 to 6, wherein the piston is mounted on a frame with the actuator, and the jacket and the injection head are what moves relative to the piston and the frame.

8. Distribution assembly according to one of claims 1 to 7, comprising a device for adjustment of the volume (8), where the maximum separation between the piston and the jacket, specifically the volume taken into the preparation chamber, can be controlled with the adjustment device.

9. Distribution assembly according to one of claims 1 to 8, wherein a release chamber (94) is provided, configured to receive the cylindrical body (30) of the slide valve when it goes back up to the open position P2, and a passage for connecting this release chamber to open air (95).

10. Distribution assembly according to one of claims 1 to 9 wherein the product used is a food product.
